# FASCICULE DE BREVET EUROPEEN

(11) **EP 3 184 592 B1**
(45) Date de publication et mention de la délivrance du brevet: **18.11.2020**
(21) Numéro de dépôt: 16205039.7
(22) Date de dépôt: 19.12.2016
(51) Int. Cl.: C09D 9/00, A01N 25/02, A01N 25/30, C09D 9/04

(54) **COMPOSITION COMPORTANT UN LIPIDE DE MANNOSYLERYTHRITOL ET DU DMSO**
ZUSAMMENSETZUNG, DIE EIN MANNOSYLERYTHRITOL-LIPID UND DMSO UMFASST
COMPOSITION COMPRISING A MANNOSYLERYTHRITOL LIPID AND DMSO

(30) Priorité: 21.12.2015 FR 1563018
(43) Date de publication de la demande: 28.06.2017
(73) Titulaire: Oleon N.V., 9940 Ertvelde (BE)
(72) Inventeur: LALLIER, Jean-Pierre, 60610 LA CROIX SAINT OUEN (FR); DEPREY, Sophie, 60280 MARGNY-LES-COMPIEGNE (FR)
(74) Mandataire: Santarelli

(56) Documents cités:
- EP-A1- 1 770 446
- EP-A2- 2 074 985
- JP-A- 2011 026 278
- JOSEPH IRUDAYARAJ ARUTCHELVI ET AL: "Mannosylerythritol lipids: a review", JOURNAL OF INDUSTRIAL MICROBIOLOGY & BIOTECHNOLOGY ; OFFICIAL JOURNAL OF THE SOCIETY FOR INDUSTRIAL MICROBIOLOGY, SPRINGER, BERLIN, DE, vol. 35, no. 12, 21 août 2008 (2008-08-21) , pages 1559-1570, XP019637554, ISSN: 1476-5535, DOI: 10.1007/S10295-008-0460-4
- MAKOTO TAKAHASHI ET AL: "Glycolipid Biosurfactants, Mannosylerythritol Lipids, Show Antioxidant and Protective Effects against H2O2-Induced Oxidative Stress in Cultured Human Skin Fibroblasts", JOURNAL OF OLEO SCIENCE, vol. 61, no. 8, 1 January 2012 (2012-01-01), pages 457-464, XP055497467, JP ISSN: 1345-8957, DOI: 10.5650/jos.61.457

## Description

La présente invention se rapporte à une composition comprenant du diméthylsulfoxide (DMSO), son procédé de préparation et ses utilisations.

L'utilisation du DMSO s'est largement développée au cours des dernières décennies. En cause notamment, la toxicité élevée de certains solvants utilisés dans le domaine du nettoyage et du décapage, qui a conduit les industriels à rechercher des solutions de remplacement. Par « solvant », dans la présente demande, on entend un liquide dans les conditions normales de température et de pression (CNTP), qui a la propriété de dissoudre, de diluer ou d'extraire d'autres substances sans provoquer de modification chimique de ces substances et sans lui-même se modifier. Le DMSO est un solvant peu volatil, incolore, inodore, et qui présente une très faible toxicité. En outre, le DMSO est un solvant fortement polaire, à caractère aprotique. Il s'est donc avéré être un solvant tout particulièrement adapté au remplacement des solvants à toxicité élevée jusque-là utilisés. Ainsi, il est connu d'utiliser le DMSO comme solvant dans des compositions de nettoyage ou de décapage industriel. Concernant le nettoyage industriel, le DMSO est notamment utilisé pour le nettoyage des pièces électroniques. Concernant le décapage, le DMSO est particulièrement employé dans le décapage de peintures ou encore le décapage de résines photosensibles utilisées pour la fabrication des circuits imprimés. En outre, au vu de sa faible toxicité, le DMSO est également utilisé comme solvant dans des compositions pharmaceutiques ou phytosanitaires.

A titre d'exemple, la demande EP0810272 divulgue notamment une composition décapante comprenant du DMSO, de l'anisole et de l'eau. EP 1 770 446 décrit un agent décapant à base de DMSO.

Cependant, certaines propriétés des compositions décapantes à base de DMSO nécessitent d'être améliorées. En effet, le DMSO présente une tension de surface particulièrement élevée, ce qui empêche les compositions décapantes comprenant du DMSO de bien s'étaler sur la surface à décaper, réduisant ainsi leur efficacité. En outre, la température de fusion du DMSO, qui est d'environ 18,5°C, est particulièrement élevée, de sorte que l'utilisation de compositions décapantes comprenant du DMSO peut devenir difficile à basse température, tel qu'en extérieur en hiver.

Il existe donc un besoin pour des compositions décapantes comprenant du DMSO dont l'efficacité serait améliorée.

Le travail de l'inventeur a permis de mettre en évidence que l'ajout d'une molécule particulière à du DMSO, permettait à la fois de diminuer la tension de surface du DMSO, et d'abaisser sa température de fusion.

L'invention concerne donc une composition comprenant :
- au moins un lipide de mannosylérythritol (MEL) ; et
- du diméthylsulfoxyde (DMSO) ;
dans laquelle la quantité totale de MEL(s) est comprise entre 0,005 et 25% en poids par rapport au poids total de la composition, le DMSO n'est pas du DMSO deutéré, et dans laquelle le ratio DMSO : MEL est compris entre 3 et 10000 ou, alternativement, la quantité de DMSO est comprise entre 25 et 99,995% en poids par rapport au poids total de la composition.

Selon l'invention, un « lipide de mannosylérythritol » (également appelé « MEL ») est un tensioactif appartenant à la classe des glycolipides. Plus particulièrement, un MEL est une molécule amphiphile dont la partie hydrophile est formée d'un résidu mannosylérythritol, et dont la partie hydrophobe est formée par au moins un acide gras.

Plus particulièrement, par « MEL », on désigne une molécule présentant la formule générale (I) suivante : 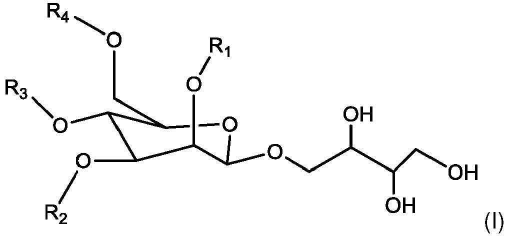 dans laquelle :
- R₁ et R₂, identiques ou différents, représentent un acide gras insaturé ou saturé, et
- R₃ et R₄, identiques ou différents, représentent un groupement acétyle ou un atome d'hydrogène.

De préférence, dans la présente invention, par « MEL », on désigne une molécule de formule (II) suivante : 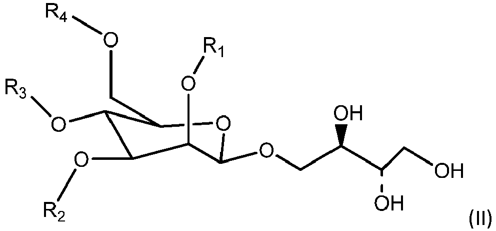 dans laquelle :
- R₁ et R₂, identiques ou différents, représentent un acide gras insaturé ou saturé, et
- R₃ et R₄, identiques ou différents, représentent un groupement acétyle ou un atome d'hydrogène.

Les formules (I) et (II) ci-avant peuvent représenter plusieurs molécules, chaque molécule étant donc un MEL. Par « MELs », on désigne au moins deux molécules de formules (I), et plus particulièrement de formule (II), différentes.

Les MELs sont généralement classés en quatre classes de molécules, notées de A à D, selon leur degré d'acétylation en R₃ et R₄. La classe des MELs-A comporte des molécules de formules (I) ou (II) présentant deux groupes acétyles en R₃ et R₄. La classe des MELs-B et la classe des MELs-C comportent des molécules de formules (I) ou (II) présentant un seul groupe acétyle en R₄ et R₃ respectivement. Enfin, la classe des MELs-D comporte des molécules de formules (I) ou (II) ne présentant pas de groupe acétyle (R₃= R₄=H).

Outre de par leur degré d'acétylation, les MELs peuvent varier dans leur structure, de par la nature des acides gras qui composent leur partie hydrophobe. Cette variation est généralement fonction du procédé mis en œuvre pour l'obtention des MELs.

Les MELs sont généralement obtenus par des procédés mettant en œuvre la culture de champignons, et plus particulièrement de levures.

Avantageusement, les MELs visés par la présente demande sont obtenus par un procédé de fermentation, comprenant les étapes suivantes :
- la culture d'une souche de champignon et plus particulièrement d'une souche de levure en présence d'une source de carbone pour obtenir des MELs; et
- la récupération des MELs ainsi obtenus.

Les souches à partir desquelles il est possible d'obtenir des MELs sont bien connues de l'homme du métier. A titre d'exemple, il est connu d'utiliser des souches de champignons du genre *Pseudozyma* ou du genre *Ustilago,* pour l'obtention de MELs.

Avantageusement, les souches utilisées dans le procédé de fermentation décrit ci-avant, permettant l'obtention de MELs, sont des souches de champignons appartenant au genre *Pseudozyma.* De préférence, la souche est *Pzeudozyma antartica* ou *Pzeudozyma aphidis.*

De telles souches sont usuellement cultivées en réacteur dans un milieu comportant du glucose, de l'eau et/ou des sels (tel que le sulfate de magnésium, le phosphate de monopotassium et/ou le nitrate d'ammonium).

Avantageusement, les différents composants du milieu (glucose et souches en particulier) sont stérilisés séparément avant introduction dans le réacteur.

La température du milieu est de préférence comprise entre 20 et 35°C, plus préférentiellement entre 25 et 30°C.

Avantageusement, la source de carbone permettant la production de MELs par la souche est une huile, telle qu'une huile végétale. De préférence, la source de carbone est une huile de soja ou encore plus préférentiellement une huile de colza. Ces huiles sont particulièrement riches en acides gras comportant une chaine carbonée à 18 atomes de carbone, tels qu'en acide oléique, linoléique et/ou linolénique, ainsi que, dans une moindre mesure, en acides gras comportant une chaine carbonée à 16 atomes de carbone, tel qu'en acide palmitique.

La récupération des MELs subséquente à l'étape de culture a pour objectif de séparer les MELs des autres composants du milieu. Cette étape peut se faire par des méthodes de séparation classiques connues de l'homme du métier.

Avantageusement, la récupération des MELs peut comprendre une ou plusieurs des méthodes de séparation suivantes :
- la décantation ;
- l'évaporation de l'eau ou le séchage ;
- la filtration; et/ou
- la centrifugation.

La composition selon l'invention contient également du diméthylsulfoxyde (DMSO). Comme indiqué ci-avant, le DMSO est un solvant organique polaire, à caractère aprotique. Il présente la formule brute C₂H₆OS.

En particulier, le DMSO visé par la présente demande n'est pas un DMSO deutéré (DMSO-d6 de formule brute C₂D₆OS).

Plus particulièrement, l'invention concerne une composition comprenant :
- au moins un lipide de mannosylérythritol (MEL) ; et
- du diméthylsulfoxyde (DMSO) ;
dans laquelle la quantité totale de MEL(s) est comprise entre 0,005 et 25% en poids par rapport au poids total de la composition, et le DMSO n'est pas du DMSO deutéré.

La composition selon l'invention a un très bon pouvoir mouillant. En effet, il a été trouvé par les inventeurs que, de façon surprenante, le MEL contenu dans la composition selon l'invention a pour effet de réduire la tension de surface du DMSO. On entend ici que la composition selon l'invention a une tension de surface significativement plus faible que celle du DMSO seul. Par « significativement », on entend que la tension de surface de la composition selon l'invention est inférieure d'au moins 3mN/m, préférentiellement d'au moins 5mN/m, plus préférentiellement d'au moins 8mN/m, à la tension de surface du DMSO seul. Ainsi, lorsque la composition selon l'invention est appliquée sur une surface solide (telle qu'une surface plane hydrophobe), le mouillage de cette surface solide par la composition est supérieur au mouillage de la même surface par du DMSO seul. L'effet des MELs sur la réduction de la tension de surface du DMSO est plus amplement décrit à l'Exemple 2.

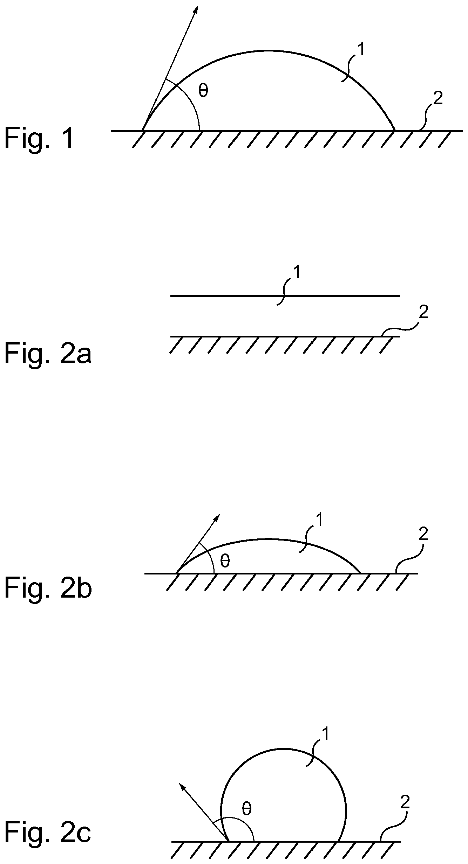

Dans le cadre de la présente demande :
- par « mouillage », on entend l'étalement d'un liquide sur un solide ;
- par « tension superficielle » d'un liquide, on entend la force exercée à l'interface entre ce liquide et un solide. Les termes « tension superficielle » et « tension de surface » sont synonymes dans la présente demande ;
- par angle de contact d'une goutte de liquide 1 déposée sur une surface solide plane 2, on entend l'angle θ formé par la tangente à la goutte de liquide 1 au point de contact avec la surface solide plane 2, tel que représenté à la Figure 1.

A titre d'exemple, lorsqu'un liquide, tel qu'une goutte de solution, et un solide, tel qu'une paroi ou une feuille végétale, sont mis en contact, la capacité du liquide à mouiller le solide, c'est-à-dire à s'étaler ou se répandre sur celui-ci, dépendra directement de la force exercée à l'interface entre liquide et solide, laquelle est généralement définie comme la tension superficielle. La tension superficielle représente donc la force permettant au liquide d'adhérer au solide, ou l'empêchant de se répandre sur celui-ci. Ainsi plus la tension superficielle est importante, moins le liquide sera capable de mouiller le solide en question.

Plusieurs cas de figures peuvent donc être représentés pour illustrer la notion de mouillage. Les Figures 2a à 2c représentent plus particulièrement trois cas de figures.

Ainsi, comme illustré sur la Figure 2a, lorsqu'une goutte de liquide 1 tombe sur une surface solide plane 2, celle-ci peut réaliser un mouillage total de cette surface 2, c'est-à-dire se répandre sur toute la surface de celle-ci, en formant un film d'angle de contact θ égal à 0 avec ladite surface 2. Alternativement, la goutte 1 peut réaliser un mouillage partiel de la surface 2 (Figure 2b), c'est-à-dire ne pas se répandre totalement sur cette dernière, en formant une goutte d'angle de contact θ compris entre 0 et 90° avec ladite surface 2. Enfin, la goutte 1 peut ne pas mouiller du tout la surface 2 (Figure 2c), c'est-à-dire ne pas se répandre sur celle-ci, en formant une goutte d'angle de contact θ supérieur à 90° avec ladite surface 2.

En outre, il a été trouvé par les inventeurs que, de façon surprenante, le MEL contenu dans la composition selon l'invention a également pour effet d'abaisser la température de fusion du DMSO. On entend ici que la composition selon l'invention a une température de fusion significativement plus basse que celle du DMSO seul. Par « significativement », on entend que la température de fusion de la composition selon l'invention est inférieure d'au moins 3°C, préférentiellement d'au moins 5°C, plus préférentiellement d'au moins 8°C, à la température de fusion du DMSO seul. Cet effet est plus amplement décrit à l'Exemple 4. La composition selon l'invention est donc facilement utilisable à basse température. En particulier, ceci facilite son stockage dans des fûts et leur manipulation.

Avantageusement, la quantité de DMSO présente dans la composition selon l'invention est comprise entre 25 et 99,995% en poids par rapport au poids total de la composition.

On notera que dans le cadre de la présente demande, et sauf stipulation contraire, les gammes de valeurs indiquées s'entendent bornes incluses.

De préférence, la quantité de DMSO présente dans la composition selon l'invention est comprise entre 50 et 99,99%, plus préférentiellement entre 75 et 99,99%, encore plus préférentiellement entre 80 et 99,99% en poids, par rapport au poids total de la composition.

Avantageusement, la quantité totale de MEL(s) présente dans la composition selon l'invention est comprise entre 0,005 et 25% en poids par rapport au poids total de la composition.

Par quantité totale de MEL(s) présente dans la composition, on entend la quantité de molécule(s) de MEL(s) de formules (I) ou (II) présente dans ladite composition.

De préférence, la quantité totale de MEL(s) est comprise entre 0,01 et 15% en poids, plus préférentiellement entre 0,05 et 7,5% en poids, plus préférentiellement encore entre 0,15 et 5% en poids, par rapport au poids total de la composition.

De préférence, dans la composition selon l'invention, le ratio DMSO : MEL est compris entre 3 et 10000, plus préférentiellement entre 50 et 1000, encore plus préférentiellement entre 100 et 500.

Avantageusement, la composition selon l'invention comprend au moins deux MELs, de classes différentes, choisis parmi le groupe constitué par MEL-A, MEL-B, MEL-C et MEL-D.

De préférence, la composition selon l'invention comprend des MEL(s)-A, MEL(s)-B, MEL(s)-C et optionnellement des MEL(s)-D, plus préférentiellement des MEL(s)-A, MEL(s)-B, MEL(s)-C et des MEL(s)-D.

Avantageusement, la composition selon l'invention comprend des MELs-A et des MELs-B à une teneur comprise entre 50 et 90% en poids, de préférence comprise entre 60 et 85% en poids, les pourcentages en poids étant indiqués par rapport au poids de la quantité totale de MELs.

Avantageusement, la composition selon l'invention comprend des MELs-C à une teneur supérieure ou égale à 5% en poids, de préférence supérieure ou égale à 10% en poids, les pourcentages en poids étant indiqués par rapport au poids de la quantité totale de MELs.

Plus particulièrement, la composition selon l'invention peut comprendre des MELs-A et des MELs-B à une teneur comprise entre 60% et 75% en poids, et des MELs-C à une teneur supérieure ou égale à 20% en poids, les pourcentages en poids étant indiqués par rapport au poids de la quantité totale de MELs.

Avantageusement, la composition selon l'invention comprend, outre du DMSO et au moins un MEL, au moins un acide gras libre et/ou au moins un triglycéride.

Par « acide gras libre », on entend toute molécule d'acide gras qui n'est pas liée à une autre molécule. Par «acide gras», on entend toute molécule d'acide gras liée à une autre molécule, par exemple lorsque cette molécule d'acide gras est présente dans un triglycéride ou dans un MEL.

Le au moins un acide gras libre et/ou au moins un triglycéride peuvent avoir été introduits concomitamment avec le au moins un MEL.

En effet, en fonction du procédé d'obtention des MELs, tel que le procédé de fermentation décrit ci-avant, et en particulier en fonction de la ou des méthode(s) de séparation mise(s) en œuvre dans l'étape de récupération, ceux-ci peuvent comporter un ou plusieurs acide(s) gras libre(s) et/ou triglycéride(s).

Par exemple, la quantité d'acide(s) gras libre(s) et/ou de triglycéride(s) présente dans la composition selon l'invention peut être comprise entre 0,0001 et 35% en poids, de préférence entre 0,001 et 20% en poids, par rapport au poids total de la composition.

Plus particulièrement, la composition comporte au moins un acide gras libre et au moins un triglycéride. Dans ce cas, la quantité d'acide(s) gras libre(s) et de triglycéride(s) présente dans la composition selon l'invention peut être comprise entre 0,005 et 35% en poids, de préférence entre 0,01 et 20% en poids, plus préférentiellement entre 0,05 et 8,5% en poids, par rapport au poids total de la composition.

Avantageusement, le ou les acide(s) gras libre(s) comporte(nt) une chaine carbonée comportant entre 14 et 24 atomes de carbone, de préférence 16 ou 18 atomes de carbone.

Avantageusement, le ou les triglycéride(s) comportent des acides gras comportant une chaine carbonée comportant entre 14 et 24 atomes de carbones, de préférence 16 ou 18 atomes de carbone.

Plus particulièrement, le ou les acide(s) gras libre(s) et/ou triglycéride(s) peut/peuvent être issu(s) de l'huile mise en œuvre lors du procédé de fermentation décrit ci-avant.

En outre, selon le procédé d'obtention des MELs, tel que le procédé de fermentation décrit ci-avant, et en particulier selon la ou les méthode(s) de séparation mise(s) en oeuvre dans l'étape de récupération, les MELs peuvent également comporter de l'eau et des souches de champignons, plus particulièrement des souches de levures.

Plus particulièrement, dans la présente demande, et en particulier dans les exemples, lorsque les MELs, à l'issue de l'étape de récupération, comportent au moins un acide gras libre, au moins un triglycéride, de l'eau et/ou des souches, ce mélange est appelé « mélange de MELs ».

Selon un mode de réalisation préféré de la composition selon l'invention, celle-ci comporte un mélange de MELs présentant les caractéristiques suivantes :
- une teneur en MELs supérieure ou égale à 40% en poids, de préférence supérieure ou égale à 50% en poids, plus préférentiellement supérieure ou égale à 55% en poids ;
- une teneur en autres composants inférieure ou égale à 60% en poids, de préférence inférieure ou égale à 50% en poids, plus préférentiellement inférieure ou égale à 45% en poids (dont acides gras libres, triglycérides, eau et/ou souches),
les pourcentages en poids étant donnés par rapport au poids total du mélange de MELs.

Avantageusement, dans ce mode de réalisation préféré, la teneur en eau et/ou souches est inférieure à 3% en poids, par rapport au poids total du mélange de MELs.

Ce mélange de MELs peut être notamment obtenu selon le procédé de fermentation décrit ci-avant.

Un exemple de mélange de MELs et son procédé d'obtention est également décrit dans la publication suivante:
- *"*Downstream processing of mannosylerythritol lipids produced by Pseudozyma aphidis"; Rau et al.; European Journal of Lipids Science and Technology 107 (2005) 373-380.

De préférence, un mélange de MELs comporte des MELs de différentes classes, en général au moins des MELs-A, B et C. Préférentiellement, ce mélange de MELs comporte des MELs-A, B, C et D.

En outre, un mélange de MELs comporte avantageusement des MELs-A et des MELs-B à une teneur comprise entre 50 et 90% en poids, de préférence comprise entre 60 et 85% en poids, les pourcentages en poids étant indiqués par rapport au poids de la quantité totale de MELs.

De plus, un mélange de MELs comporte avantageusement des MELs-C à une teneur supérieure ou égale à 5% en poids, de préférence supérieure ou égale à 10% en poids, les pourcentages en poids étant indiqués par rapport au poids de la quantité totale de MELs.

Plus particulièrement, un mélange de MELs peut comporter des MELs-A et des MELs-B à une teneur comprise entre 60% et 75% en poids, et des MELs-C à une teneur supérieure ou égale à 20% en poids, les pourcentages en poids étant indiqués par rapport au poids de la quantité totale de MELs.

De tels mélanges de MELs sont par exemple obtenus à l'aide d'un procédé de fermentation tel que ceux décrits ci-avant.

Il est également possible d'obtenir un mélange de MELs présentant une teneur en MELs supérieure ou égale à 95%, de préférence supérieure ou égale à 98% en poids, par rapport au poids total du mélange de MELs. Ce mélange de MELs peut, par exemple, être obtenu à l'aide du procédé de fermentation décrit ci-avant auquel est ajoutée une étape de purification, à l'issue de l'étape de récupération. Cette étape de purification peut comporter une extraction liquide/liquide et/ou un passage sur un substrat minéral. Le passage sur un substrat minéral peut être une chromatographie, telle qu'une chromatographie d'adsorption sur colonne de silice, réalisée à l'aide de solvants adaptés. De tels solvants sont connus de l'homme du métier.

Selon un mode de réalisation alternatif préféré de la composition selon l'invention, celle-ci peut donc comporter également un mélange de MELs qui présente les caractéristiques suivantes :
- une teneur en MELs supérieure ou égale à 95% en poids, de préférence supérieure ou égale à 98% en poids,
les pourcentages en poids étant donnés par rapport au poids total du mélange de MELs.

En outre, l'étape de purification, suite à l'étape de récupération des MELs, peut être effectuée de sorte à obtenir une classe de MELs ou même un MEL, à une teneur supérieure ou égale à 50%. A titre d'exemple, cette étape de purification peut comporter une extraction liquide/liquide et/ou un passage sur un substrat minéral (tel qu'une chromatographie), tels que définis ci-avant.

De préférence, la composition selon l'invention comprend, en outre du DMSO, un autre solvant.

A titre d'exemple, la composition peut comprendre, comme autre solvant, une cétone, un ester ou un éther.

Selon un premier mode de réalisation de la composition selon l'invention, celle-ci est une composition décapante.

Selon ce premier mode de réalisation, la composition comprend en outre un ou plusieurs ingrédients choisis parmi le groupe constitué par:
- un épaississant, tel qu'un épaississant dérivé de la cellulose (comme la méthylhydroxypropylcellulose) ;
- un activateur acide (comme l'acide formique) ou basique (comme l'alcanol amide).
Par « activateur », on entend un composé qui vise à améliorer l'efficacité d'une composition décapante, en particulier en réduisant la résistance au décapage des revêtements des surfaces à décaper.

Selon un second mode de réalisation de la composition selon l'invention, celle-ci est une composition phytosanitaire.

Selon ce second mode de réalisation, la composition comprend en outre un ou plusieurs ingrédients choisis parmi le groupe constitué par:
- un principe actif fongicide tel qu'un carboxamide, un triazole, l'imidazole, la morpholine;
- un principe actif herbicide tel qu'un inhibiteur de biosynthèse lipidique, un inhibiteur de l'acétolactase synthase (également appelé « inhibiteur d'ALS »), un inhibiteur de photosynthèse;
- un principe actif insecticide tel qu'un organo(thio)phosphate, un carbamate, un pyrethrinoïde.

L'invention concerne également un procédé de préparation d'une composition selon l'invention, comprenant une étape de mélangeage d'au moins un MEL avec du DMSO.

Les compositions selon l'invention sont facilement préparables, par simple mélangeage des composants.

Avantageusement, le mélangeage est réalisé à température ambiante dans les conditions normales de température et de pression (CNTP).

De préférence, pendant le mélangeage, les composants sont chauffés à une température comprise entre 25 et 55°C, plus préférentiellement entre 30 et 50°C, encore plus préférentiellement entre 35 et 45°C.

Le chauffage des composants permet une meilleure homogénéisation de la composition selon l'invention.

Optionnellement, préalablement au mélangeage, le procédé de préparation d'une composition selon l'invention comprend l'obtention d'au moins un MEL, tel que cela est décrit ci-avant.

Avantageusement, le(s) MEL(s) est/sont obtenus par le procédé de fermentation de MEL(s) décrit ci-avant, optionnellement suivi d'une étape de purification.

La divulgation vise en outre l'utilisation d'un MEL pour réduire la tension de surface du DMSO.

Comme indiqué ci-avant, on entend ici que la composition selon l'invention a une tension de surface significativement plus faible que celle du DMSO seul.

Avantageusement, la tension de surface de la composition selon l'invention est inférieure d'au moins 3mN/m, préférentiellement d'au moins 5mN/m, plus préférentiellement d'au moins 8mN/m, à la tension de surface du DMSO seul.

La divulgation vise également l'utilisation d'un MEL pour abaisser la température de fusion du DMSO.

Comme indiqué ci-avant, on entend ici que la composition selon l'invention a une température de fusion significativement plus basse que celle du DMSO seul.

Avantageusement, la température de fusion de la composition selon l'invention est inférieure d'au moins 3°C, préférentiellement d'au moins 5°C, plus préférentiellement d'au moins 8°C, à la température de fusion du DMSO seul.

Les compositions selon l'invention peuvent être utilisées pour de nombreuses applications telles que celles, usuelles du DMSO (par exemple, en tant que solvant).

L'invention concerne également l'utilisation d'une composition selon l'invention et plus particulièrement selon le premier mode de réalisation d'une composition selon l'invention, en tant qu'agent décapant.

Avantageusement, ces compositions sont utilisées dans le décapage industriel, tel que le décapage de peintures, de vernis ou de laques, ou le décapage de résines photosensibles.

De préférence, ces compositions sont utilisées dans le décapage de peintures, de vernis ou de laques, préférentiellement le décapage de peintures.

En outre, ces compositions peuvent être utilisées dans tout type de nettoyage industriel, tel que le nettoyage des circuits électroniques, ou dans la bioremédiation des sols, en particulier des sols pollués.

L'invention concerne enfin l'utilisation d'une composition selon l'invention et plus particulièrement selon le second mode de réalisation d'une composition selon l'invention, en tant qu'agent phytosanitaire.

A titre d'exemple, ces compositions peuvent être utilisées comme agent phytosanitaire pour améliorer la mouillabilité des feuilles.

Avantageusement, les compositions selon l'invention son utilisées comme agent mouillant dans une formulation fongicide, herbicide ou insecticide.

L'invention sera mieux comprise au vu des exemples qui suivent, donnés à titre illustratif, avec référence à :
- La Figure 1, qui représente l'angle de contact θ formé par la tangente à une goutte de liquide 1 au point de contact avec une surface solide plane 2 ;
- La Figure 2, qui illustre trois cas de figures illustrant la notion de mouillage, à savoir le cas d'un mouillage total d'une surface solide plane 2 par une goutte de liquide 1 (Fig. 2a), le cas d'un mouillage partiel d'une surface solide plane 2 par une goutte de liquide 1 (Fig. 2b), le cas où une goutte de liquide 1 ne mouille pas une surface solide plane 2 (Fig. 2c) ;
- La Figure 3, qui est un diagramme présentant l'effet des MELs sur l'angle de contact du DMSO, et sur l'angle de contact de solvants comparatifs ;
- La Figure 4, qui est un diagramme présentant l'effet des MELs et de tensioactifs comparatifs sur l'angle de contact du DMSO ; et
- La Figure 5, qui est un diagramme présentant le résultat de l'analyse par calorimétrie différentielle à balayage (Differential Scanning Calorimetry, « DSC ») d'une composition selon l'invention.

### Exemple 1 : Préparation de compositions selon l'invention

### 1. Obtention de MELs

Les MELs ont été obtenus par un procédé de fermentation comprenant les étapes suivantes :
- la culture d'une souche de levure telle que *Pseudozyma aphidis* en présence d'huile végétale (colza) pour obtenir les MELs; et
- la récupération des MELs ainsi obtenus.

A l'issue de l'étape de récupération des MELs, un premier mélange de MELs (mélange de MELs 1A) est obtenu, qui présente les caractéristiques suivantes :
- Teneur en MELs: 55% en poids
- Teneur en autres composants : 45% en poids (dont 42% en poids d'acides gras libres et de triglycérides et 3% en poids d'eau et de souche),
les pourcentages en poids étant donnés par rapport au poids total du mélange de MELs obtenu.

Une étape de purification du mélange de MELs 1A a ensuite été réalisée par chromatographie d'adsorption sur colonne de silice, avec utilisation d'un mélange de solvants ayant un gradient de polarité croissant. Un second mélange de MELs (mélange de MELs 1B) a ainsi été obtenu, qui présente les caractéristiques suivantes :
- Teneur en MELs: au moins 98% en poids, par rapport au poids total du mélange de MELs obtenu.

En particulier, chacun des mélanges de MELs 1A et 1B comportent des MELs-A à une teneur de 52% en poids, des MELs-B à une teneur de 12% en poids, des MELs-C à une teneur de 35% en poids, et des MELs-D à une teneur de 1% en poids, les pourcentages en poids étant donnés par rapport au poids de la quantité totale de MELs.

### 2. DMSO

Le DMSO utilisé provenait de chez Arkema (grade technique pour utilisations industrielles).

### 3. Procédé de préparation de la composition selon l'invention

Dans un flacon en verre de 60 mL, 0,25 g du mélange de MELs 1A et 45,75 g du DMSO ont été ajoutés et agités manuellement jusqu'à homogénéisation de la composition. Lors de l'agitation, il est possible de chauffer la composition à 40°C pour faciliter l'homogénéisation.

De la même manière, une composition à partir du mélange de MELs 1B a été préparée.

### Exemple 2 : Effet des MELs sur l'angle de contact et la tension de surface du DMSO et de solvants comparatifs

### 1. Matériels et méthodes

### 1.1 Matériel

Les produits qui ont été utilisés dans cet Exemple sont les suivants :
- les mélanges de MELs 1A et 1B préparés à l'Exemple 1
- les solvants :
   - DMSO (Arkema, grade technique pour utilisations industrielles)
   - Méthyl-5-(diméthylamino)-2-méthyl-5-oxopentanoate (Rhodiasolv® Polarclean - Solvay)
   - N,N diméthyl octanamide/décanamide (Agnique® AMD 810 - BASF)

Le Tableau 1 ci-dessous présente les valeurs des paramètres de solubilité de Hansen (δD, δP, δH) de la composition selon l'invention préparée à l'Exemple 1 à partir du mélange de MELs 1A, des solvants utilisés dans l'Exemple 2, et de la N-méthyl-2-pyrrolidone (NMP). Les paramètres de solubilité de Hansen permettent de définir la capacité de solubilisation des solvants. Des solvants ayant des valeurs de paramètres de Hansen proches présentent une capacité de solubilisation similaire. Ces paramètres ont été mesurés à l'aide du logiciel HSPiP 4.1.07. (4^{ème} édition).

La NMP étant un solvant toxique et de moins en moins utilisé dans l'industrie, notamment l'industrie des décapants, ce solvant n'a pas été utilisé dans cet exemple. La NMP est généralement remplacée par le Méthyl-5-(dimethylamino)-2-méthyl-5-oxopentanoate et le N,N diméthyl octanamide/décanamide. Le Tableau 1 montre que les valeurs des paramètres de solubilité de Hansen du DMSO et de la composition selon l'invention sont plus proches de celles de la NMP, en comparaison avec les valeurs du Méthyl-5-(dimethylamino)-2-méthyl-5-oxopentanoate et du N,N diméthyl octanamide/décanamide. La composition selon l'invention semble donc être une solution de remplacement de la NMP.

**Tableau 1 : Valeurs des paramètres de solubilité de Hansen de la composition selon l'invention préparée à l'Exemple 1 (à partir du mélange de MELs 1A), des solvants utilisés dans l'Exemple 2 et de la NMP.**

| Solvant | δ_{D} | δ_{P} | δ_{H} |
|---|---|---|---|
| Composition selon l'invention préparée à l'Exemple 1 et DMSO | 17,4 | 14,2 | 7,3 |
| Méthyl-5-(dimethylamino)-2-méthyl-5-oxopentanoate | 17,2 | 9,5 | 10,6 |
| N,N diméthyl octanamide/décanamide | 16,8 | 7,25 | 5,45 |
| NMP | 18,1 | 10,6 | 6,6 |

| | | | |
|---|---|---|---|
| * δ_{D} représente l'énergie provenant des forces de dispersion entre les molécules du solvant, δ_{P} représente l'énergie provenant des forces intermoléculaires dipolaires entre les molécules du solvant, et δ_{H} représente l'énergie provenant des liaisons hydrogènes entre les molécules du solvant. | | | |

Le matériel suivant a également été utilisé dans cet Exemple :
- des flacons en verre,
- une seringue de 1 mL munie d'une aiguille de diamètre 0,63 mm
- un parafilm hydrophobe (Parafilm « M », NEENAH, WI 54956)
- le goniomètre DSA10 (KRUSS)
- le logiciel « Drop shape analysis » (KRUSS)
- le tensiomètre K100C (KRUSS)
- le logiciel KRUSS analysis

### 1.2. Méthodes

### Préparation de la composition selon l'invention et de compositions comparatives

Des compositions comprenant le mélange de MELs 1A et chacun des différents solvants, ainsi qu'une composition comprenant le mélange de MELs 1B et du DMSO, ont été préparées, afin de réaliser des mesures d'angle de contact et de tension superficielle.

Les compositions ont été préparées comme suit :
Dans un flacon en verre, 0,5% en poids du mélange de MELs ont été ajoutés à 99,5% en poids de solvant, les % en poids étant indiqués par rapport au poids total de la composition obtenue, puis agités manuellement jusqu'à homogénéisation des compositions. Lors de l'agitation, il est possible de chauffer les différentes compositions à 40°C pour faciliter l'homogénéisation.

Le Tableau 2 ci-dessous résume les différentes compositions préparées :

**Tableau 2 : Compositions préparées dans l'Exemple 2.**

| | |
|---|---|
| Composition 1A selon l'invention | DMSO + mélange de MELs 1A |
| Composition 1B selon l'invention | DMSO + mélange de MELs 1B |
| Composition 2 comparative | Rhodiasolv® Polarclean + mélange de MELs 1A |
| Composition 3 comparative | N,N diméthyl octanamide/décanamide + mélange de MELs 1A |

Des solutions contrôles ne comprenant que le solvant pur, à savoir du DMSO (solution contrôle 1), du Rhodiasolv® Polarclean (solution contrôle 2) et du N,N diméthyl octanamide/décanamide (solution contrôle 3), ont également été préparées.

### Mesures des anales de contact et de la tension superficielle

Des mesures d'angle de contact ont été réalisées pour chacune des compositions 1 à 3 et des solutions contrôles 1 à 3, à l'aide du goniomètre.

Pour cela, une goutte de chaque composition ou solution contrôle (3µL) a été formée à l'aide de la seringue. La seringue a ensuite été placée à environ 0,5 cm au-dessus du parafilm hydrophobe. Par la pesanteur, cette goutte s'est détachée de l'aiguille et est tombée sur le parafilm hydrophobe. Le suivi de la variation de l'angle de contact a été assuré dès le moment où la goutte a touché le parafilm, et ce pendant 10 minutes, grâce au logiciel d'analyse.

Les résultats ont ensuite été traités afin de comparer les variations d'angles de contact pour chacune des compositions 1 à 3, par rapport aux solutions contrôles.

La tension superficielle de chacune des compositions et des solutions contrôles a également été mesurée.

La tension superficielle a été mesurée à l'aide du tensiomètre, grâce à la méthode de la lame de Wilhelmy.

### 2. Résultats

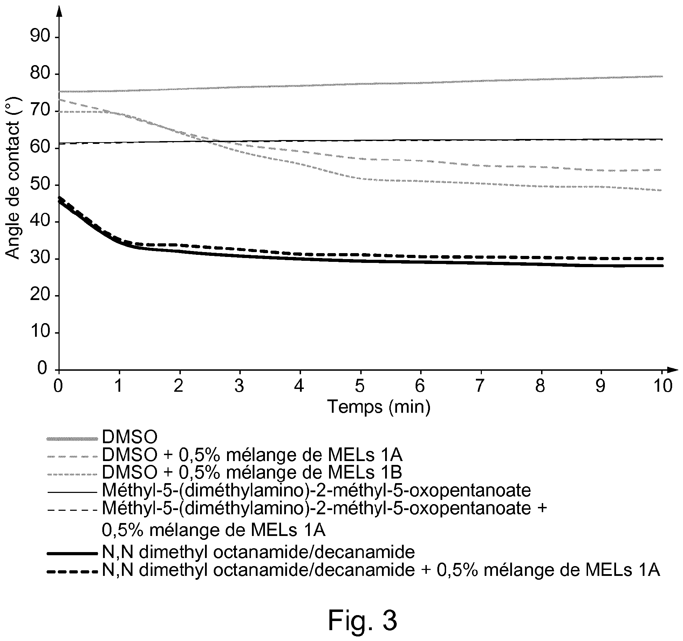

Les résultats des mesures d'angle de contact pour chacune des compositions 1 à 3 et des solutions contrôles 1 à 3 sont présentés à la Figure 3.

Les résultats montrent que la variation de l'angle de contact des compositions 2 et 3 est quasiment identique à la variation de leurs solutions contrôles 2 et 3 respectives. Il n'y a pas eu de diminution de l'angle de contact avec les compositions 2 et 3, par rapport aux solutions contrôles 2 et 3.

Au contraire, la variation de l'angle de contact des compositions 1A et 1B est très différente de celle de la solution contrôle 1. On peut remarquer une forte diminution de l'angle de contact avec les compositions 1A et 1B, par rapport à la solution contrôle 1.

Concernant les tensions superficielles, les résultats pour chacune des compositions 1 à 3 et des solutions contrôles 1 à 3 sont présentés dans le Tableau 3 ci-dessous.

**Tableau 3 : Tension superficielle des compositions et solutions contrôles 1 à 3, préparées à l'Exemple 2.**

| Solutions | Tension superficielle (mN/m) |
|---|---|
| Solution contrôle 1 | 44,1 |
| Composition 1A selon l'invention | 36,2 |
| Composition 1B selon l'invention | 32,7 |
| Solution contrôle 2 | 37,3 |
| Composition 2 comparative | 37,3 |
| Solution contrôle 3 | 31 |
| Composition 3 comparative | 30,8 |

Les tensions superficielles mesurées des compositions 2 et 3 étaient, respectivement, environ égales à celles des solutions contrôles 2 et 3.

Au contraire, la tension superficielle des compositions 1A et 1B étaient bien inférieure à celle de la solution contrôle 1.

Ces résultats montrent que, de façon surprenante, les MELs permettent de diminuer l'angle de contact, ainsi que la tension superficielle du DMSO.

En outre, le DMSO et la composition selon l'invention présente des valeurs des paramètres de solubilité de Hansen très proches de celle de la NMP, de sorte que la capacité de solubilisation de la composition selon l'invention est proche de celle de la NMP. La composition selon l'invention représente donc une solution de remplacement de la NMP.

### Exemple 3 : Effet des MELs et de différents tensioactifs comparatifs sur l'anale de contact du DMSO

### 1. Matériels et Méthodes

### 1.1 Matériel

### - tensioactifs :

- le mélange de MELs 1A préparé à l'Exemple 1
- du caprylate de polyglycérol-3 (Polyglycerol-3 caprylate) (Tegosoft® PC31 - Evonik)
- du caprate de polyglycérol-3 (Polyglycerol-3 caprate) (Radia® 7423 - Oléon)
- du dodécylbenzènesulfonate de calcium (Ninate® 60E - Stepan)
   - du DMSO (Arkema, grade technique pour utilisations industrielles)
   - des flacons en verre
   - une seringue de 1 mL munie d'une aiguille de diamètre 0,63 mm
   - un parafilm hydrophobe (Parafilm « M », NEENAH, WI 54956)
   - le goniomètre DSA10 (KRUSS)
   - le logiciel « Drop shape analysis » (KRUSS)

### 1.2. Méthodes

Des compositions comprenant du DMSO et chacun des différents tensioactifs ont été préparées, afin de réaliser des mesures d'angles de contact.

Les compositions ont été préparées comme suit :
Dans un flacon en verre, 0,25 g de tensioactif et 49,75 g de DMSO ont été ajoutés et agités manuellement jusqu'à homogénéisation des compositions, avec chauffage à 40°C pour faciliter l'homogénéisation des différentes compositions.

Le Tableau 4 ci-dessous résume les compositions préparées:

**Tableau 4: Compositions préparées à l'Exemple 3.**

| | |
|---|---|
| Composition 1 selon l'invention | Mélange de MELs 1A + DMSO |
| Composition 2 comparative | Caprylate de polyglycérol-3 + DMSO |
| Composition 3 comparative | Laurate de polyéthylèneglycol-8 + DMSO |
| Composition 4 comparative | Dodécylbenzènesulfonate de calcium + DMSO |

Une solution contrôle ne comprenant que du DMSO a également été préparée, et son angle de contact mesuré.

### 2. Résultats

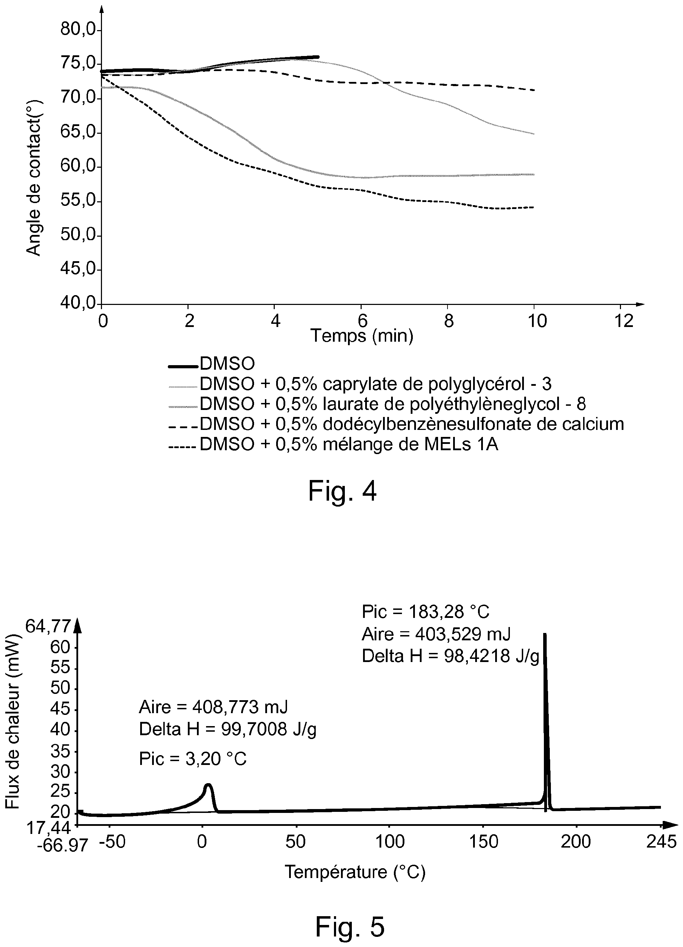

Les résultats des mesures d'angles de contact pour chacune des compositions 1 à 4 et de la solution contrôle sont présentés à la Figure 4.

Les résultats montrent que la variation de l'angle de contact de la composition 1 est plus importante que la variation obtenue pour les compositions 2 à 4, par rapport à la solution contrôle. On peut remarquer une forte diminution de l'angle de contact avec la composition 1.

### Exemple 4 : Effet des MELs sur la température de fusion du DMSO

Une composition selon l'invention a été analysée par calorimétrie différentielle à balayage (Differential Scanning Calorimetry, « DSC »). La DSC permet de mesurer le flux de chaleur nécessaire pour maintenir un échantillon « test » (ici la composition selon l'invention) et un échantillon de référence (ici le DMSO pur) à une même température. Par cette méthode, il est notamment possible de déterminer les températures de changement d'états de l'échantillon « test », telles que la température de fusion ou la température d'ébullition, ou encore l'enthalpie.

En outre, une analyse de la cristallisation d'une composition selon l'invention a également été effectuée.

### 1. Matériels et méthodes

### 1.1 Matériel

- le mélange de MELs 1A préparé à l'Exemple 1
- du DMSO (Arkema, grade technique pour utilisations industrielles)
- des flacons en verre
- un calorimètre différentiel à balayage (DSC 6000, PerkinElmer)
- des creusets en aluminium de 50 µL avec couvercle (PerkinElmer)
- une pipette pasteur

### 1.2. Méthodes

### 1.2.1. Analyse par DSC d'une composition selon l'invention

### Préparation de la composition selon l'invention

Dans un flacon en verre, 0,5g du mélange de MELs et 99,5 g de DMSO ont été ajoutés, puis agités manuellement jusqu'à homogénéisation de la composition. Lors de l'agitation, il est possible de chauffer celle-ci à 40°C pour faciliter l'homogénéisation. A l'aide d'une pipette, un échantillon de 3mg de la composition (« échantillon test) a été prélevé avec la pipette pasteur, et placé dans un creuset, dont le couvercle a ensuite été refermé.

### Préparation de l'échantillon référence

Un échantillon référence de 3mg de DMSO a également été disposé dans un creuset dont le couvercle a été refermé.

### Réalisation de la DSC

Les creusets contenant les échantillons « test » et de référence préparés ci-dessus ont ensuite été disposés dans le calorimètre, afin de réaliser la DSC.

Les conditions opératoires de la DSC étaient les suivantes:
- Atmosphère : sous azote, avec un flux d'azote de 20 mL/min.
- Programme de température : chauffage de -60 à 300°C, avec une augmentation de la température de 10°C/min.

### 1.2.2. Analyse de la cristallisation d'une composition selon l'invention

Dans un flacon en verre, 0,5 g du mélange de MELs et 45,5g de DMSO ont été ajoutés puis agités manuellement jusqu'à homogénéisation de la composition. Lors de l'agitation, il est possible de chauffer celle-ci à 40°C pour faciliter l'homogénéisation. Le flacon en verre a ensuite été placé dans un bain-marie. La température du bain a été réglée à différentes températures, à savoir 8°C, 9°C et 10°C. L'état de la composition selon l'invention a été observé pendant 5 minutes à chacune de ces températures.

### 2. Résultats

### 2.1. Résultats de l'analyse par DSC d'une composition selon l'invention

Les résultats de l'analyse par DSC de la composition selon l'invention (échantillon « test ») sont présentés à la Figure 5, et dans le Tableau 5 ci-dessous.

**Tableau 5 : Résultats de l'analyse par DSC d'une composition selon l'invention, réalisée dans l'Exemple 4.**

| | Température de début du phénomène (°C) | Température au sommet du pic (°C) | Température de fin de phénomène (°C) | Enthalpie (J/g) |
|---|---|---|---|---|
| Phénomène de fusion | -6,6 +/- 0,3 | 3,2 +/- 0,3 | 7,4 +/- 0,3 | 99,7 +/- 1 |
| Phénomène d'ébullition | 183,2 +/- 0,3 | 183,3 +/- 0,3 | 186,0 +/- 0,3 | 98,4 +/- 1 |

Les résultats montrent que le phénomène de fusion de la composition selon l'invention a lieu entre -6,6°C et 7,4°C.

La composition selon l'invention a donc une température de fusion environ égale à 7,4 °C, laquelle est bien inférieure à celle du DMSO seul, à savoir 18,5°C.

En outre, la composition selon l'invention a une température d'ébullition (183°C) légèrement inférieure celle du DMSO seul (189°C).

### 2.2. Résultats de l'analyse de la cristallisation d'une composition selon l'invention

Il a été observé qu'à 8°C, la composition selon l'invention commençait à cristalliser. En revanche, à 9 et 10°C, la composition selon l'invention était à l'état liquide. Ces résultats confirment les résultats de l'analyse par DSC concernant la température de fusion de la composition selon l'invention.

### Exemple 5 : Exemple de composition décapante selon l'invention

| **Composants** | **% en poids*** |
|---|---|
| DMSO | 30 |
| MEL(s) | 1 |
| Esters dibasiques (Rhodiasolv® IRIS - Solvay) | 50 |
| Ester d'acide dicarboxylique | 16 |
| Méthylhydroxypropylcellulose | 2,6 |
| Eau | 0,4 |

| | |
|---|---|
| *Les pourcentages en poids sont indiqués par rapport au poids total de la composition décapante | |

### Exemple 6 : Exemple de composition phytosanitaire selon l'invention

| **Composants** | **% en poids*** |
|---|---|
| DMSO | 45 |
| MEL(s) | 1 |
| Esters méthyliques | 44 |
| Triazole | 10 |

| | |
|---|---|
| *Les pourcentages en poids sont indiqués par rapport au poids total de la composition phytosanitaire | |

## Revendications

1. Composition comprenant :
- au moins un lipide de mannosylérythritol (MEL) ; et
- du diméthylsulfoxyde (DMSO) ;
dans laquelle la quantité totale de MEL(s) est comprise entre 0,005 et 25% en poids par rapport au poids total de la composition, le DMSO n'est pas du DMSO deutéré, et dans laquelle le ratio DMSO : MEL est compris entre 3 et 10000.

2. Composition comprenant :
- au moins un lipide de mannosylérythritol (MEL) ; et
- du diméthylsulfoxyde (DMSO) ;
dans laquelle la quantité totale de MEL(s) est comprise entre 0,005 et 25% en poids par rapport au poids total de la composition, le DMSO n'est pas du DMSO deutéré, et dans laquelle la quantité de DMSO est comprise entre 25 et 99,995% en poids par rapport au poids total de la composition.

3. Composition selon la revendication 1 ou 2, dans laquelle la composition comprend au moins deux MELs choisis parmi le groupe constitué par MEL-A, MEL-B, MEL-C et MEL-D.

4. Composition selon l'une quelconque des revendications 1 à 3, comprenant en outre au moins un acide gras libre et/ou au moins un triglycéride.

5. Composition selon l'une quelconque des revendications 1 à 4, comprenant, en outre du DMSO, un autre solvant.

6. Composition décapante selon l'une quelconque des revendications 1 à 5, comprenant un épaississant.

7. Composition phytosanitaire selon l'une quelconque des revendications 1 à 5, comprenant un principe actif fongicide, herbicide et/ou insecticide.

8. Procédé de préparation d'une composition selon l'une quelconque des revendications 1 à 7, comprenant une étape de mélangeage d'au moins un MEL avec du DMSO.

9. Utilisation d'une composition selon l'une quelconque des revendications 1 à 6, en tant qu'agent décapant.

10. Utilisation d'une composition selon l'une des revendications 1 à 5, 7 en tant qu'agent phytosanitaire.

## Patentansprüche

1. Zusammensetzung, umfassend:
- mindestens ein Mannosylerythritol-Lipid (MEL); und
- Dimethylsulfoxid (DMSO);
wobei die Gesamtmenge der MEL(s) zwischen 0,005 und 25 Gew.-%, bezogen auf das Gesamtgewicht der Zusammensetzung, beträgt, das DMSO nicht deuteriertes DMSO ist und wobei das Verhältnis DMSO : MEL zwischen 3 und 10.000 liegt.

2. Zusammensetzung, umfassend:
- mindestens ein Mannosylerythritol-Lipid (MEL); und
- Dimethylsulfoxid (DMSO);
wobei die Gesamtmenge an MEL(s) zwischen 0,005 und 25 Gew.-%, bezogen auf das Gesamtgewicht der Zusammensetzung, beträgt, das DMSO nicht deuteriertes DMSO ist, und wobei die Menge an DMSO zwischen 25 und 99,995 Gew.-%, bezogen auf das Gesamtgewicht der Zusammensetzung, beträgt.

3. Zusammensetzung nach Anspruch 1 oder 2, wobei die Zusammensetzung mindestens zwei MELs umfasst, die aus der Gruppe ausgewählt sind, die aus MEL-A, MEL-B, MEL-C und MEL-D besteht.

4. Zusammensetzung nach einem der Ansprüche 1 bis 3, ferner umfassend mindestens eine freie Fettsäure und/oder mindestens ein Triglycerid.

5. Zusammensetzung nach einem der Ansprüche 1 bis 4, die neben DMSO ein weiteres Lösungsmittel enthält.

6. Abbeizzusammensetzung nach einem der Ansprüche 1 bis 5, umfassend ein Verdickungsmittel.

7. Pflanzenschutzmittelzusammensetzung nach einem der Ansprüche 1 bis 5, die einen fungiziden, herbiziden und/oder insektiziden Wirkstoff enthält.

8. Verfahren zur Herstellung einer Zusammensetzung nach einem der Ansprüche 1 bis 7, umfassend einen Schritt des Mischens mindestens eines MEL mit DMSO.

9. Verwendung einer Zusammensetzung nach einem der Ansprüche 1 bis 6 als Abbeizmittel.

10. Verwendung einer Zusammensetzung nach einem der Ansprüche 1 bis 5 und 7 als Pflanzenschutzmittel.

## Claims

1. Composition comprising
- at least one mannosylerythritol lipid (MEL); and
- dimethyl sulfoxide (DMSO);
in which the total quantity of MEL(s) is comprised between 0.005 and 25% by weight with respect to the total weight of the composition, the DMSO is not deuterated DMSO, and in which the DMSO : MEL ratio is comprised between 3 and 10,000.

2. Composition comprising:
- at least one mannosylerythritol lipid (MEL); and
- dimethyl sulfoxide (DMSO);
in which the total quantity of MEL(s) is comprised between 0.005 and 25% by weight with respect to the total weight of the composition, the DMSO is not deuterated DMSO, and in which the quantity of DMSO is comprised between 25 and 99.995% by weight with respect to the total weight of the composition.

3. Composition according to claim 1 or 2, in which the composition comprises at least two MELs selected from the group constituted by MEL-A, MEL-B, MEL-C and MEL-D.

4. Composition according to any one of claims 1 to 3, also comprising at least one free fatty acid and/or at least one triglyceride.

5. Composition according to any one of claims 1 to 4, comprising, as well as DMSO, another solvent.

6. Stripping composition according to any one of claims 1 to 5, comprising a thickening agent.

7. Phytosanitary composition according to any one of claims 1 to 5, comprising a fungicidal, herbicidal and/or insecticidal active ingredient.

8. Process for the preparation of a composition according to any one of claims 1 to 7, comprising a step of mixing at least one MEL with DMSO.

9. Use of a composition according to any one of claims 1 to 6, as a stripping agent.

10. Use of a composition according to any one of claims 1 to 5, 7 as a phytosanitary agent.
